# EUROPEAN PATENT APPLICATION

(11) **EP 3 213 998 A1**
(43) Date of publication of application: **06.09.2017**
(21) Application number: 15723987.2
(22) Date of filing: 13.04.2015
(51) Int. Cl.: B64F 1/305

(54) **STOP SYSTEM FOR GANGWAYS COMPRISING THREE OR MORE TUNNELS FOR AIRCRAFT AND WATERCRAFT BOARDING**

(30) Priority: 13.08.2014 ES 201431223
(71) Applicant: Thyssenkrupp Airport Systems, S.A., 33682 Mieres (Asturias) (ES)
(72) Inventor: MURIAS BERMEJO, Antonio, E-33682 Mieres (Asturias) (ES); VÁZQUEZ HERNÁNDEZ, Antonio, E-33682 Mieres (Asturias) (ES); HERNÁNDEZ ESPINA, Manuel, E-33682 Mieres (Asturias) (ES); FERNÁNDEZ DÍAZ, Julián, E-33682 Mieres (Asturias) (ES)
(74) Representative: thyssenkrupp Intellectual Property GmbH
(86) International application number: PCT/ES2015/070294
(87) International publication number: WO 2016/024031

(57) **Abstract**

Brake system on passenger boarding bridges with three or more tunnels for boarding aircraft and vessels, formed by an initial tunnel (1), one or more intermediate tunnels (2, 2.1), an end tunnel (3) and drive means (4), comprising a longitudinal coupling profile (8), with means of assembly or friction along its whole length, firmly fixed to one or more tunnels and a blocking device (9-10-11-12), with means of assembly or friction, corresponding with those of the longitudinal coupling profile (8), and retaining means, said blocking device being firmly fixed to one or more tunnels and associated with extension cables (7-7.1) and retraction cables (6-6.1), said longitudinal coupling profile (8) and blocking device (9-10-11 or 12) being positioned facing each other and separated in an inactive state and coupled together in an active state, blocking the position of the intermediate tunnel or tunnels (2, 2.1.).

## Description

### Object of the invention

Brake system on passenger boarding bridges with three or more tunnels for boarding aircraft and vessels, said passenger boarding bridges comprising an initial tunnel, one or more intermediate tunnels, an end tunnel and drive means, comprising a longitudinal coupling profile firmly fixed to one or more tunnels, covering the telescoping range of the passenger boarding bridge and a blocking device, with means of assembly or friction corresponding with those of the longitudinal coupling profile and retaining means, the blocking device being firmly fixed to one or more tunnels and being associated with an extension and retraction cable or cables, or with an extension and retraction cable or cables with electric signal; the longitudinal coupling profile and the blocking device being positioned facing each other and separated in an inactive state, and coupled together in an active state, the longitudinal profiles and blocking devices being positioned both on the lower part of the tunnels and on the ceiling of the same.

The object of the invention is devised to detect the breakage or failure of the synchronisation system between tunnels and, in such an event, to activate the intermediate tunnel or tunnels brake system, said activation being able to be entirely mechanical, hydraulic or electromagnetic.

### Background of the invention

Passenger boarding bridges for boarding aircraft or vessels may be composed of several tunnels capable of telescoping together to adopt a variable length, which, within the fixed ranges, allows them to dock with the aircraft or vessel that they serve.

These passenger boarding bridges may be composed of two or more tunnels, the object of the present invention being those passenger boarding bridges that have more than two tunnels. In said passenger boarding bridges, telescoping of the intermediate tunnel or tunnels is performed by means of a synchronisation system made up of cables and pulleys that connect the intermediate tunnels with the fixed parts of the passenger boarding bridge, allowing the telescoping movement between tunnels.

At present, passenger boarding bridges with more than two tunnels are fitted with at least two synchronisation cables, one for the retracting movement and another for the extending movement, as well as with the number of pulleys, required to guide these cables to achieve the necessary synchronisation. Depending on the size of the tunnels, the direction of movement of the passenger boarding bridge and its tilt when in use, the tension of said cables may vary considerably.

Said telescoping movement between tunnels is possible thanks to a system of separate rollers which, fixed at specific points on each tunnel forming part of the passenger boarding bridge, connect one tunnel with another, guiding and transmitting structural loads and allowing longitudinal movement between one tunnel and another.

Finally, the tunnels are driven by means of the drive system of the passenger boarding bridge, which, attached to one of the tunnels forming part of the passenger boarding bridge, causes said tunnel to move while, by means of the system of cables and pulleys, this tunnel synchronises the telescoping of the intermediate tunnels.

One of the most serious problems that may occur in the system described, may arise in the event of a failure in the synchronisation system between tunnels, in which case, the intermediate tunnel or tunnels would become completely free, allowing them to move uncontrollably until impacting with the nearest mechanical safety stops, with the possibility of causing injury to the operator or the users of the passenger boarding bridge or damage to the machine structure itself, there being actions aimed at increasing safety in the event of breakage of the synchronisation elements, for example, the over-dimensioning of elements that may be liable to failure.

It is however true that even though these systems reduce the possibility of accidents, they do not resolve the aforementioned problem, and furthermore inadequate maintenance of the synchronisation system can considerably reduce or even diminish the safety level offered by said designs.

Patent ES2412607 describes a brake system for the cab of boarding bridges for accessing aircraft and ships, composed of braking means to block the rotation of the cab, intended solely for boarding bridges that include a rotunda.

Another solution described in utility model CN201777388 is composed of an electromagnetic brake associated with a T-shaped rail that is activated in the event of breakage or slackening of the tensioning cables.

### Description of the invention

The present invention seeks to eliminate the aforementioned problems by means of a system which, upon detection of breakage, failure or excessive slackening of the cables forming part of the telescoping synchronization mechanism, activates a system for braking the intermediate tunnel or tunnels, said telescoping synchronization mechanism being located on the lower part or on the ceiling of the tunnels.

In accordance with the invention and according to a preferred embodiment, braking of the intermediate tunnel or tunnels is achieved with a device for blocking the telescoping movement between tunnels.

The brake system on passenger boarding bridges with three or more tunnels for boarding aircraft and vessels comprises a longitudinal coupling profile, configured with means of assembly or friction along its whole length, covering the entire telescoping range of the passenger boarding bridge, firmly fixed to one or more tunnels, and a blocking device with means of assembly or friction corresponding with those of the longitudinal coupling profile and retaining means, the blocking device being firmly fixed to one or more tunnels, said blocking device being associated with an extension and retraction cable or cables, or with an extension and retraction cable or cables with electric signal; the longitudinal coupling profile and the blocking device being positioned facing each other and separated in an inactive state, and coupled together in an active state, the longitudinal profiles and blocking devices being positioned both on the lower part of the tunnels and on the ceiling of the same.

A passenger boarding bridge with three tunnels is configured with:
- a longitudinal coupling profile firmly fixed on the intermediate tunnel and a blocking device, firmly fixed on the end tunnel, or
- a longitudinal coupling profile, firmly fixed on the initial tunnel and a blocking device, firmly fixed on the intermediate tunnel.

A passenger boarding bridge with four tunnels is configured with:
- a longitudinal coupling profile firmly fixed on both intermediate tunnels and a blocking device, firmly fixed on the intermediate tunnel and on the end tunnel, or
- a longitudinal coupling profile, firmly fixed on the initial tunnel and on the intermediate tunnel and a blocking device, firmly fixed on the intermediate tunnel and on the end tunnel.

In an inactive state the longitudinal coupling profile and the blocking device are positioned facing each other and separated.
In an active state the longitudinal coupling profile and the blocking device are coupled together by the means of assembly or friction.

The means of assembly or friction of the blocking device comprise a fixed frame with mobile frames associated with the blocking device retaining means, one end of said fixed frame having a rollover protection support for securing the mobile frames with a lock pin in its central zone, said fixed frame incorporating in is middle zone, control means and two pulleys associated with the retraction cable and, near to said pulleys, another two pulleys associated with the extension cable.
The fixed frame also includes brackets for fastening the lugs of the retraction cable and of the extension cable, optionally incorporating a tension spring on one or more lugs.

One of the mobile frames is associated with the extension cable and the other mobile frame, of identical characteristics, is associated with the retraction cable.

Each of the synchronisation extension and retraction cables can have its associated mobile blocking system, although a single blocking system associated with both cables simultaneously is also possible.

Each of the mobile frames is formed by a platform with a cavity at one end intended for inserting the non-return pin, said platform incorporating, at the opposite end, an anchoring sleeve of the retaining means of the blocking device,

Each of the platforms of the mobile frames includes a connecting head configured with means of assembly or friction, coinciding with the means of assembly or friction of the longitudinal coupling profile and, in its middle zone, a central pulley associated with two side pulleys located on the fixed frame, which are in turn associated either with the retraction cable or with the extension cable.

The mobile frames are released from the retaining means in the event of breakage, failure or excessive slackening of the synchronisation system between tunnels, passing from a locked position to an active position in which it engages in the longitudinal coupling profile, blocking it and thus preventing the uncontrolled advance of the tunnel in question.

The control means inform a central control unit of the passing of the mobile frames from an inactive to active position, which may block machine operation.

The blocking device retaining means comprise a spring that is secured by one of its ends to the anchoring sleeve of the mobile frame platforms, said spring being secured at the opposite end to a fixed tensioner.

The active and inactive position of the means of assembly or friction can be attained by electromechanical or hydraulic systems, which, when connected to the system, push it in the appropriate direction to carry out the blocking and braking of the intermediate tunnel or tunnels.

Likewise, the means for detecting a total lack or excessive reduction of tautness in the tunnel synchronisation cables may consist of electrical systems which will activate the hydraulic or electromechanical elements connected to the system in order to move it from its inactive position to the active position to achieve the blocking and braking of the intermediate tunnel or tunnels.

The systems for detecting the breakage of the synchronization cables may be cables with internal electric conductor wires whose signal is interrupted when the cable breaks, activating the hydraulic or electromagnetic systems that cause the brake system to move from the inactive position to the active position, halting the advance of the intermediate tunnel or tunnels.

The means for guiding the movement of the blocking system from its inactive position to its active position may also be used to contribute structurally to halting the intermediate tunnel or tunnels, transmitting the corresponding load to the part of the tunnel's structure not operated by synchronization, on which the system that is the object of the invention has been fixed.

In an alternative embodiment the brake system on passenger boarding bridges with three or more tunnels for boarding aircraft and vessels, comprises a longitudinal coupling profile, configured with means of assembly or friction along its entire length, firmly fixed to a tunnel or tunnels and a blocking device, with means of assembly or friction and retaining means, firmly fixed to the corresponding tunnel, said blocking device being associated with an extension cable and with a retraction cable provided with an internal electric signal which, when interrupted due to breakage or slackening of said cables, activates the actuators which operate the brake system.

The means of assembly or friction of the blocking device comprise a fixed frame with mobile frames associated with retaining means, one end of said fixed frame having a rollover protection support with a lock pinin its central zone for securing the mobile frames, said fixed frame also incorporating in is middle zone, control means for the positioning of the mobile frames.
The fixed frame also includes securing brackets for the lugs of the retraction cable and the extension cable, optionally incorporating a tension spring on one or more lugs.

One of the mobile frames is associated with the extension cable and the other mobile frame with the retraction cable, said mobile frames being formed by a platform with a cavity at one end, intended for inserting the lock pin and incorporating, at the opposite end, a fastening bolt of the blocking device retaining means, said platform incorporating a connecting head configured with means of assembly or friction coinciding with the means of assembly or friction of the longitudinal coupling profile.

The blocking device retaining means comprise an actuator anchored at one end to the head of the stem of said actuator with the fastening bolt of the mobile frame platforms and anchored, at the opposite end, to a fixed support.

In an alternative embodiment the brake system on passenger boarding bridges with three or more tunnels for boarding aircraft and vessels, comprises a longitudinal coupling profile, configured with means of assembly or friction along its entire length, firmly fixed to a tunnel or tunnels and a blocking device, with means of assembly or friction and retaining means, firmly fixed to the corresponding tunnel, said blocking device being associated with an extension cable and with a retraction cable.

The means of assembly or friction of the blocking device comprise a fixed frame with anchoring supports associated with retaining means, said fixed frame having a non-return block for securing a rotating bar with bearings, incorporating a window in its central zone and control means for positioning the rotating bar.
The rotating bar incorporates, at its respective ends, a thrust plate, each positioned with a different orientation and facing the blocking device retaining means, said rotating bar having, in its central zone, a connection block configured to coincide with the means of assembly or friction of the longitudinal coupling profile, and said connection block being housed in the window of the fixed frame.

The non-return block locks the position of the connection block of the rotating bar with the longitudinal coupling profile, preventing any recoil movement.

The blocking device retaining means comprise a spring that is associated with a thrust head and, in turn, either with the extension cable or with the retraction cable.

In another alternative embodiment the brake system on passenger boarding bridges with three or more tunnels for boarding aircraft and vessels, comprises a longitudinal coupling profile, configured with means of assembly or friction along its entire length, firmly fixed to a tunnel or tunnels and a blocking device, with means of assembly or friction and retaining means, firmly fixed to the corresponding tunnel, said blocking device being associated with an extension cable and with a retraction cable equipped with an internal electric signal which, when interrupted due to breakage or slackening of said cables, activates the actuators which operate the brake system.

The means of assembly or friction of the blocking device include a fixed frame with anchoring supports associated with retaining means, said fixed frame having a non-return block for securing a rotating bar with bearings, also incorporating a window in its central zone and means of control to position the rotating bar.

The rotating bar incorporates, at its respective ends, a thrust plate, each positioned with a different orientation and facing the blocking device retaining means, said rotating bar having, in its central zone, a connection block coinciding with the means of assembly or friction of the longitudinal coupling profile, and said connection block being housed in the window of the fixed frame.

The non-return block, locks the position of insertion of the connection block of the rotating bar with the longitudinal coupling profile, preventing any recoil movement.

The blocking device retaining means comprise an actuator associated with a thrust head and, in turn, with the extension cable or with the retraction cable.

### Description of the figures

To provide a better understanding of this invention, a preferred practical embodiment of it is shown in the drawing attached.
Figure 1 shows a passenger boarding bridge for boarding aircraft or vessels formed by three telescopic tunnels and drive means.
Figure 2 shows a schematic view from above of a passenger boarding bridge with three tunnels, with the extension and retraction synchronisation cable system as well as the location of the guide pulleys and the brake system, object of the invention
Figure 3 shows a schematic view from above of a passenger boarding bridge with three tunnels, with the extension and retraction synchronisation cable system as well as the location of the guide pulleys and the brake system, object of the invention
Figure 4 shows a schematic view from above of a passenger boarding bridge with more than three tunnels, represented in this case with four tunnels, with the extension and retraction synchronisation cable system as well as the location of the guide pulleys and the brake system, object of the invention
Figure 5 shows a schematic view from above of a passenger boarding bridge with more than three tunnels, represented in this case with four tunnels, with the extension and retraction synchronisation cable system as well as the location of the guide pulleys and the brake system, object of the invention
Figure 6 shows a sectional view of the location of the brake system and a design detail of the longitudinal coupling profile facing the blocking device.
Figure 7 shows a general perspective view of the brake system in a preferred embodiment, in its inactive position.
Figure 8 shows a general perspective view of the brake system in a preferred embodiment, in its active position.
Figure 9 shows a general perspective view of the brake system in an alternative embodiment, in its inactive position.
Figure 10 shows a general perspective view of the brake system in an alternative embodiment, in its inactive position.
Figure 11 shows a sectional view detail of the brake system in an alternative embodiment, in its active position.
Figure 12 shows a general perspective view of the brake system in an alternative embodiment, in its inactive position.

### Preferred embodiment of the invention

The conformation, characteristics and operation of the brake system of the invention can be better understood in the following description that relates to a preferred implementation mode and to alternative embodiments, shown in the attached figures.

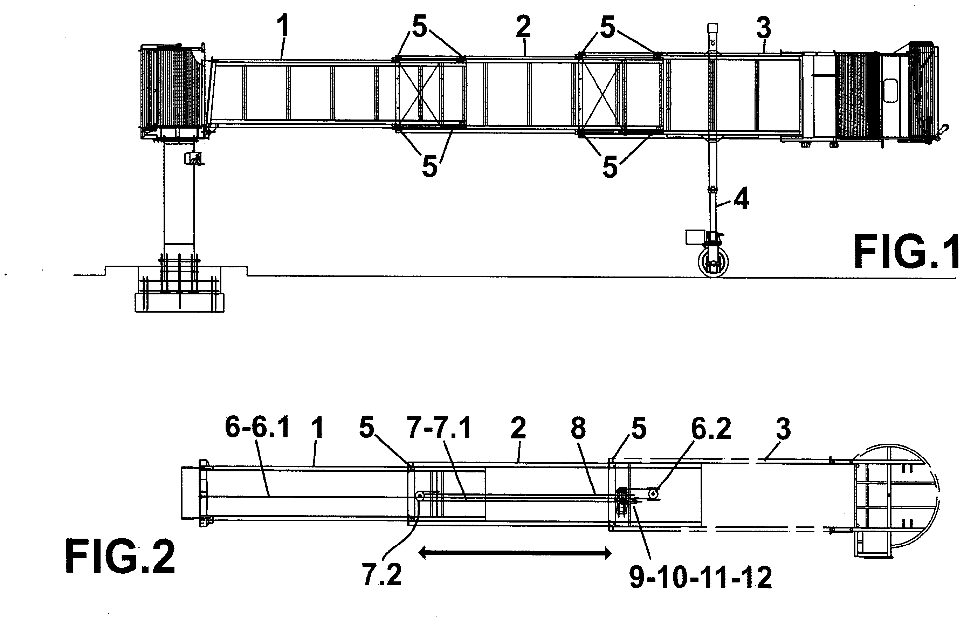

As can be observed in figure 1, in a passenger boarding bridge with three sections, the intermediate tunnel (2), telescopes in synchronization with the movement of the end tunnel (3), attached to the lift and drive system (4) of the passenger boarding bridge, while the initial tunnel (1) is fixed at one of its ends, not being able to move longitudinally.
Also shown is the telescoping system of a three-tunnel passenger boarding bridge, indicating the location of the rollers (5) for telescoping that connect and guide the tunnels together. Figure 2 schematically shows a three-tunnel passenger boarding bridge, incorporating the brake system fixed to a tunnel driven by synchronization, indicating the location of the longitudinal coupling profile (8) on the intermediate tunnel (2) and the blocking device (9-10-11 or 12) on the end tunnel (3), associated with the retraction cables (6,6.1), fixed to the initial tunnel (1) at one end and to the end tunnel (3) at the other, guided through a main pulley (6.2) firmly fixed on the end of the intermediate tunnel (2).
Likewise, it shows the extension cable (7, 7.1), fixed at one end to the initial tunnel (1) and at the other to the end tunnel (3), guided through a main pulley (7.2), firmly fixed to the start of the intermediate tunnel (2),

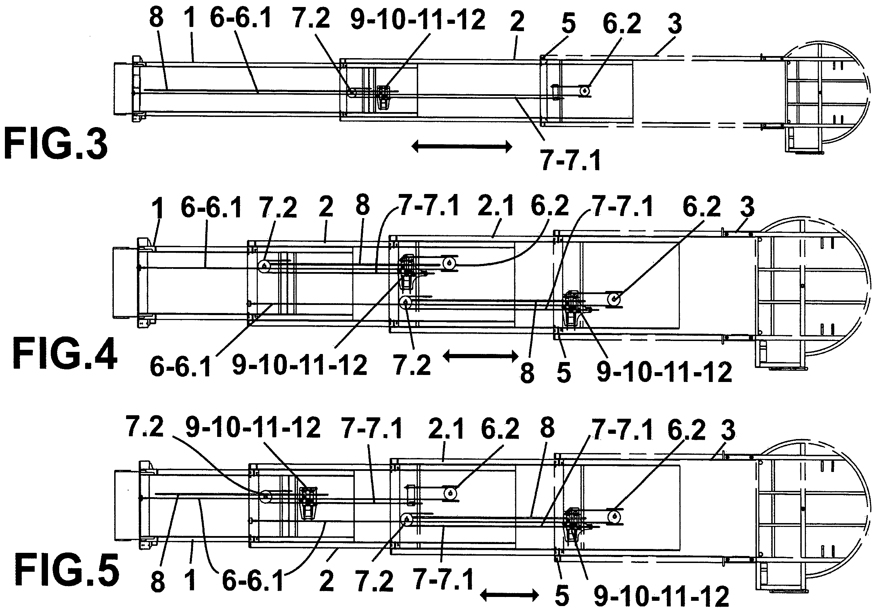

Figure 3 schematically shows a three-tunnel passenger boarding bridge, incorporating the brake system fixed to a tunnel driven by synchronization, indicating the location of the longitudinal coupling profile (8) on the initial tunnel (1) and the blocking device (9-10-11 or 12) on the intermediate tunnel (2), associated with the retraction cable (6,6.1), fixed to the initial tunnel (1) at one end and to the end tunnel (3) at the other, guided through a main pulley (6.2) firmly fixed on the end of the intermediate tunnel (2).
Likewise, it shows the extension cable (7, 7.1), fixed at one end to the initial tunnel (1) and at the other to the end tunnel (3), guided through a main pulley (7.2), firmly fixed to the start of the intermediate tunnel (2).

Figure 4 schematically shows the synchronization cable system of a four-tunnel passenger boarding bridge, showing a retraction cable (6, 6.1), fixed to the initial tunnel (1) at one end and to the intermediate tunnel (2.1) at the other, guided through a main pulley (6.2), firmly fixed on the intermediate tunnel (2.1).
Likewise it shows another retraction cable (6, 6.1) fixed to the intermediate tunnel (2) at one end and to the end tunnel (3) at the other, guided through a main pulley (6.2), firmly fixed on the end tunnel (3).
Likewise, it shows the extension cable (7, 7.1), guided through a main pulley (7.2), firmly fixed to the start of the intermediate tunnel (2), and another extension cable (7, 7.1) guided through a main pulley (7.2) firmly fixed to the start of the intermediate tunnel (2.1).
Also indicating the location of the longitudinal coupling profile (8) on both intermediate tunnels (2 and 2.1) and a blocking device (9-10-11 or 12) on the intermediate tunnel (2.1) and on the end tunnel (3).

Figure 5 schematically shows the synchronization cable system of a four-tunnel boarding bridge, showing a retraction cable (6, 6.1), fixed to the initial tunnel (1) at one end and to the intermediate tunnel (2.1) at the other, guided through a main pulley (6.2), firmly fixed on the intermediate tunnel (2.1).
It also shows another retraction cable (6, 6.1) fixed to the intermediate tunnel (2) at one end and to the end tunnel (3) at the other, guided through a main pulley (6.2), firmly fixed on the end tunnel (3).
Likewise, it shows the extension cable (7, 7.1), guided through a main pulley (7.2), firmly fixed to the start of the intermediate tunnel (2), and another extension cable (7, 7.1) guided through a main pulley (7.2) firmly fixed to the start of the intermediate tunnel (2.1).
Also indicating the location of the longitudinal coupling profile (8) on the initial tunnel (1) and intermediate tunnel (2.1) and a blocking device (9-10-11 or 12) on the intermediate tunnel (2) and on the end tunnel (3).

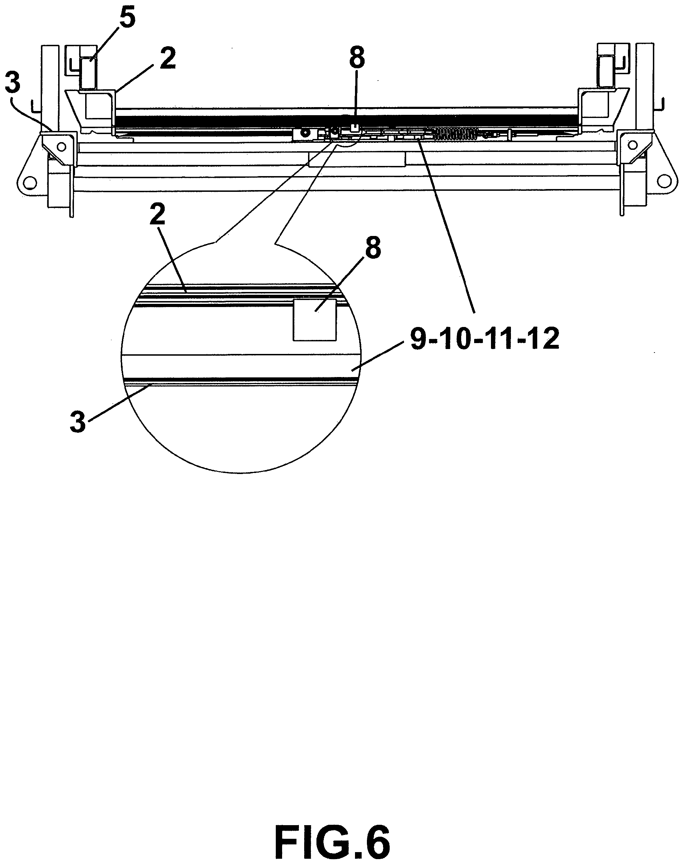

Figure 6 shows a section, corresponding to figure 2, indicating the location of the brake system and of the longitudinal coupling profile (8) which is firmly fixed to an intermediate tunnel (2) along all of the necessary length of said tunnel, to cover the telescoping range of the passenger boarding bridge.
The detailed view shows the appropriate shape of one of the faces of the longitudinal coupling profile (8), suitably oriented towards the blocking device (9-10-11-12), with means of assembly or friction and retaining means to allow its coupling and the consequent braking or blocking of the intermediate tunnel (2) with the end tunnel (3). Also having control devices or sensors (38) to inform about the state of the brake system.

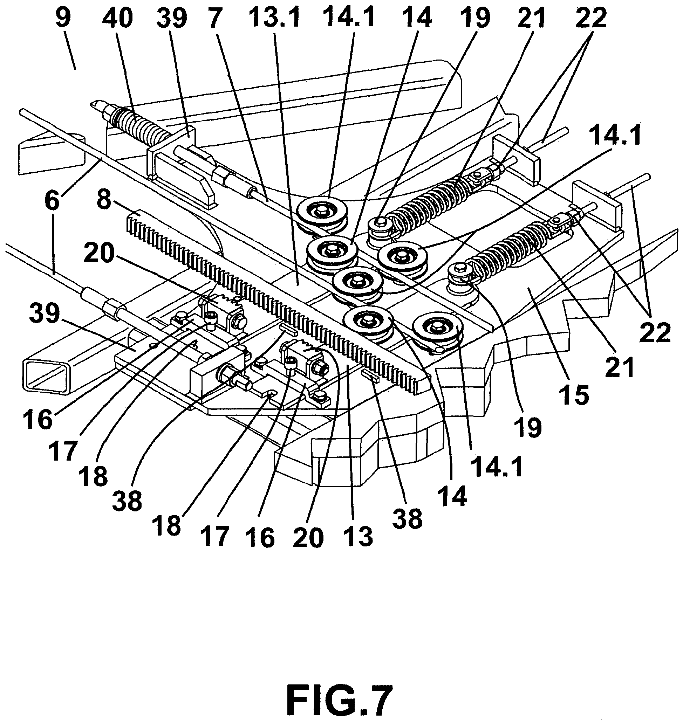

Figure 7 shows a perspective view of the preferred embodiment of the invention with the blocking device (9) in an inactive state, the means of assembly or friction being comprised of mobile frames (13) and (13.1), assembled on a fixed frame (15), as well as the longitudinal coupling profile (8), firmly fixed to the tunnel (1, 2 or 2.1) not shown.
The mobile frame (13) is associated with the retraction cable (6) and the mobile frame (13.1) is associated with the extension cable (7).
Also shown is the follow-up of the synchronisation retraction cables (6) and extension cables (7), carried out through a central pulley (14) and two side pulleys (14.1) which are in permanent contact with the corresponding cable (6 and 7).
Said pulleys (14 and 14.1), can rotate freely around their central axis or can be firmly fixed to it. Each central pulley (14) of follow-up of the cables (6) and (7) is firmly fixed in its mobile frame (13) and (13.1).

The mobile frames (13 and 13.1) secure their position, at one end, by means of a rollover protection support (16), attached to the fixed frame (15), having a lock pin (17) in its central area.
The mobile frames (13 and 13.1) are formed by a platform with a cavity (18) at one end, intended for inserting the lock pin (17), said platform incorporating, at the opposite end, an anchoring sleeve (19) of the retaining means of the blocking device (9),
The mobile frames (13 and 13.1) incorporate a connecting head (2) configured with means of assembly or friction coinciding with the means of assembly or friction of the longitudinal coupling profile (8).
The retaining means of the blocking device (9), include a spring (21), fastened at one end to the anchoring sleeve (19) of the mobile frames (13 and 13.1) and, at the opposite end, to a fixed tensioner (22) that allows spring (21) preload.
As can be seen, the whole of the blocking device (9) is mounted on a fixed frame (15) which is firmly attached to the tunnel (2, 2.1 or 3), in the appropriate position.
Said fixed frame (15) serves as a guide for the mobile frames (13 and 13.1) as well as for housing the side pulleys (14.1) destined for the follow-up of the retraction cable (6) and extension cable (7).
Also shown are the control means (38) for informing a central control unit of the positioning of the mobile frames (13 and 13.1), when passing from an inactive to an active position.
The fixed frame (15) also includes securing brackets (39) for the lugs of the retraction cable (6) and of the extension cable (7), optionally incorporating a tension spring (40) on one or more lugs.

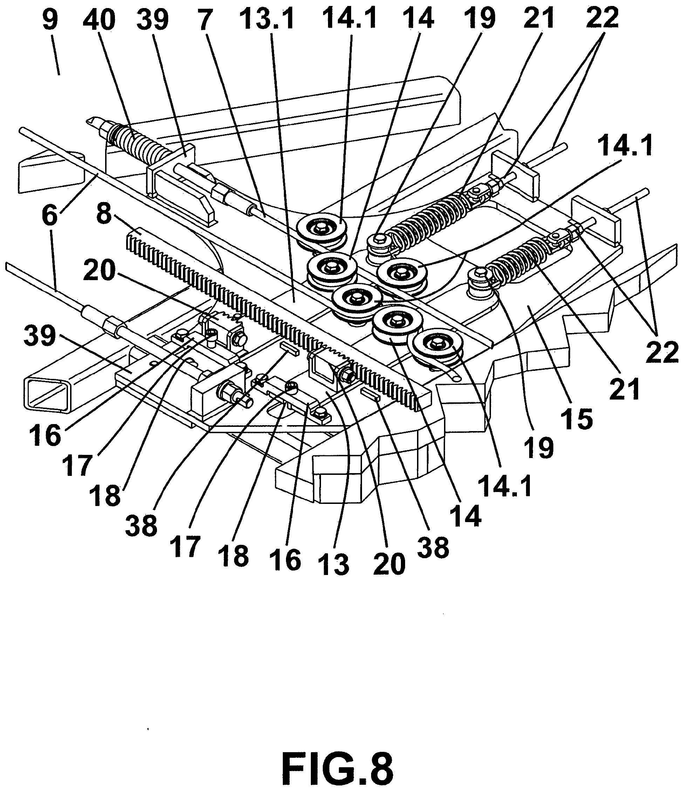

Figure 8 shows a perspective view of the preferred embodiment of the invention with the blocking device (9) in an active state, showing a failure due to breakage or slackening of the retraction cable (6), with the simultaneous entry into action of the spring (21), which when compressed modifies the position of the mobile frame (13), the rollover protection support (16) entering into action to prevent the rollover of the mobile frame (13) when the connecting head (20) changes from an inactive position to an active position, allowing correct coupling with the longitudinal coupling profile (8).
Simultaneously, when the mobile frame (13) changes its position, the lock pin (17) of the rollover protection support (16) moves vertically by gravity, entering the cavity (18) in the end of the mobile frame (13), preventing any type of displacement.
Likewise, when the mobile frame (13) changes its position, the central pulley (14) becomes almost aligned with its corresponding side pulleys (14.1).

Also shown are the control means (38) informing a central control unit of the change in the positioning of the mobile frame (13), in an active position.

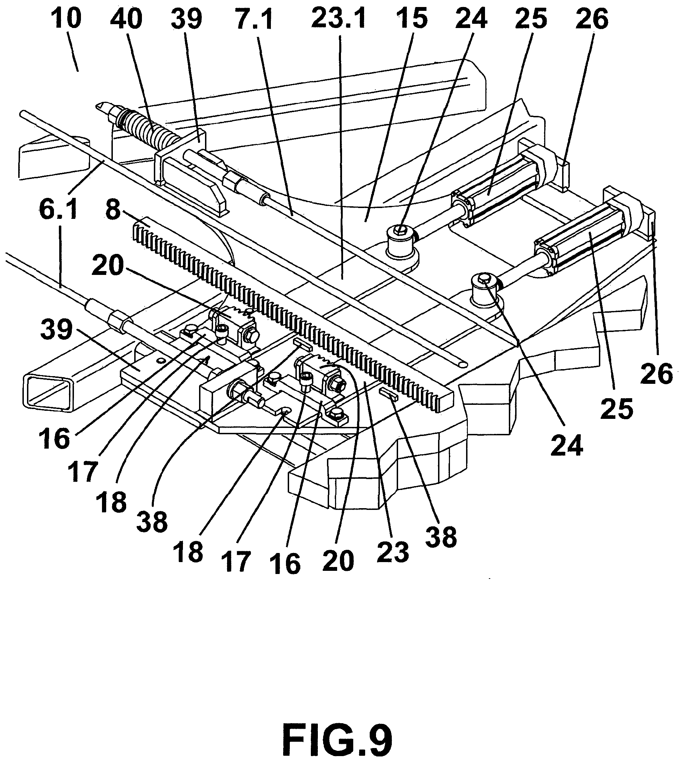

Figure 9 shows a perspective view of an alternative embodiment of the invention with the blocking device (10) in an inactive state, the means of assembly or friction being comprised of mobile frames (23) and (23.1), assembled on a fixed frame (15), as well as the longitudinal coupling profile (8), firmly fixed to the tunnel (1, 2 or 2.1), not shown.
The mobile frame (23) is associated with the retraction cable (6.1) and the mobile frame (23.1) is associated with the extension cable (7.1).
The mobile frames (23 and 23.1) secure their position, at one end, by means of a rollover protection support (16), attached to the fixed frame (15), having a lock pin (17) in its central area.
The mobile frames (23 and 23.1) are formed by a platform with a cavity (18) at one end, intended for inserting the lock pin (17), said platform incorporating at the opposite end a fastening bolt (24) of the retaining means of the blocking device (10),
The mobile frames (23 and 23.1) incorporate a connecting head (20) formed with means of assembly or friction coinciding with the means of assembly or friction of the longitudinal coupling profile (8).
The retaining means of the blocking device (10), comprise an actuator (25), anchored at one end to the fastening bolt (24) of the mobile frames (23 and 23.1) and, at the opposite end, to a fixed support (26).
As can be seen, the whole of the blocking device (10) is mounted on a fixed frame (15) which is firmly fixed to the tunnel (2, 2.1 or 3), in the appropriate position, serving as a guide for the mobile frames (23 and 23.1).
Also shown are the control means (38) for informing a central control unit of the positioning of the mobile frames (23 and 23.1), when passing from an inactive to an active position.
The fixed frame (15) also includes securing brackets (39) for the lugs of the retraction cable (6.1) and of the extension cable (7.1), optionally incorporating a tension spring (40) on one or more lugs.
In this alternative embodiment, the retraction cable (6.1) and the extension cable (7.1) include an internal electric signal which, when interrupted due to breakage or slackening of said cables, activates the actuators (25) that operate the brake system.
The position of the blocking device (10) in an active state, which is not shown, can be taken as a reference from figure 5.

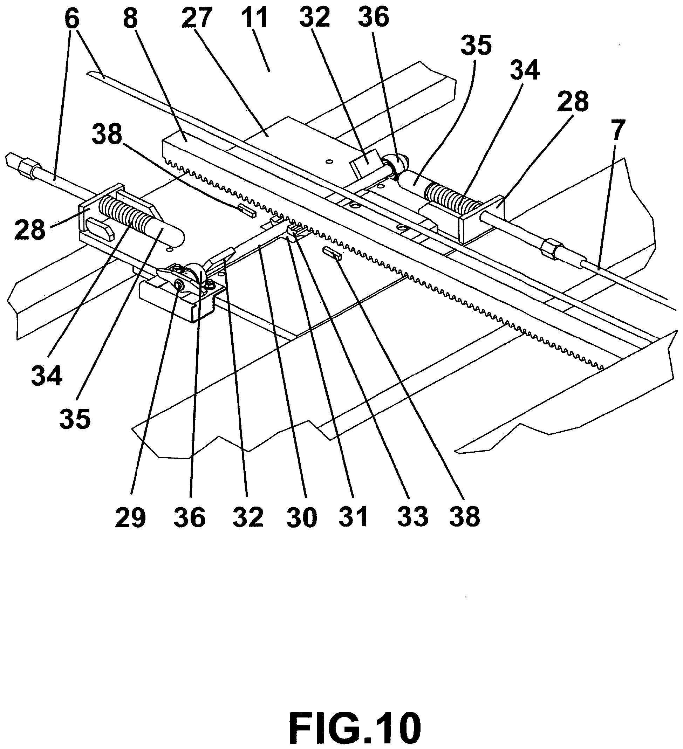

Figure 10 shows a perspective view of another alternative embodiment, with the blocking device (11) in an inactive state, the means of assembly or friction being comprised of a fixed frame (27) with anchor supports (28) associated with retaining means,
The fixed frame (27) has a non-return block (29) to guide a rotating bar (30), and a window (31) in its central zone.
The rotating bar (30) positions its attachment to the fixed frame (27) by means of bearings (36).
The rotating bar (30) incorporates a thrust plate (32) at its respective ends, each positioned with a different orientation and facing the retaining means of the blocking device (11), said rotating bar (30) incorporating, in its central zone, a connection block (33) coinciding with the means of assembly or friction of the longitudinal coupling profile (8), said connection block (33) showing its position in the window (31) of the fixed frame (27).
The retaining means of the blocking device (11) comprise a spring (34) that is associated with a thrust head (35) and, in turn, either with the extension cable (7) or with the retraction cable (6).
Also shown are the control means (38) for informing a central control unit of the positioning of the rotating bar (30), when passing from an inactive to an active position.

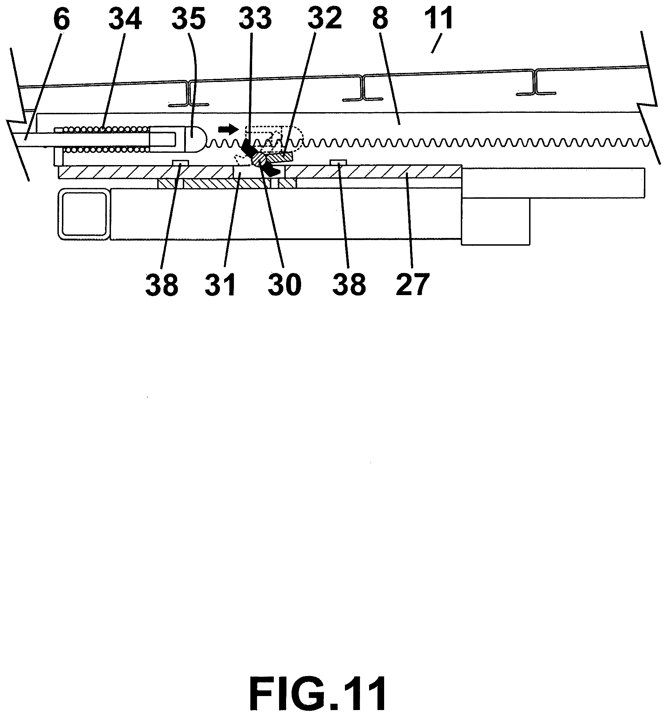

Figure 11 shows a section of the alternative embodiment, shown in figure 10, with the blocking device (11) in an active state, due to the failure by breakage or slackening of either the extension cable (7) or the retraction cable (6), with the spring (34) coming into action simultaneously, which by decompressing, moves its thrust head (35) towards one of the thrust plates (32) of the rotating bar (30), causing said bar to rotate.
Simultaneously, when the rotating bar (30) rotates, the connection block (33) allows it to engage correctly with the longitudinal coupling profile (8) of the intermediate tunnel (1, 2 or 2.1).
Simultaneously the non-return block (29) enters into action, preventing any type of displacement.
Also shown are the control means (38) that inform a central control unit of the change in the positioning of the rotating bar (30), in an active state.

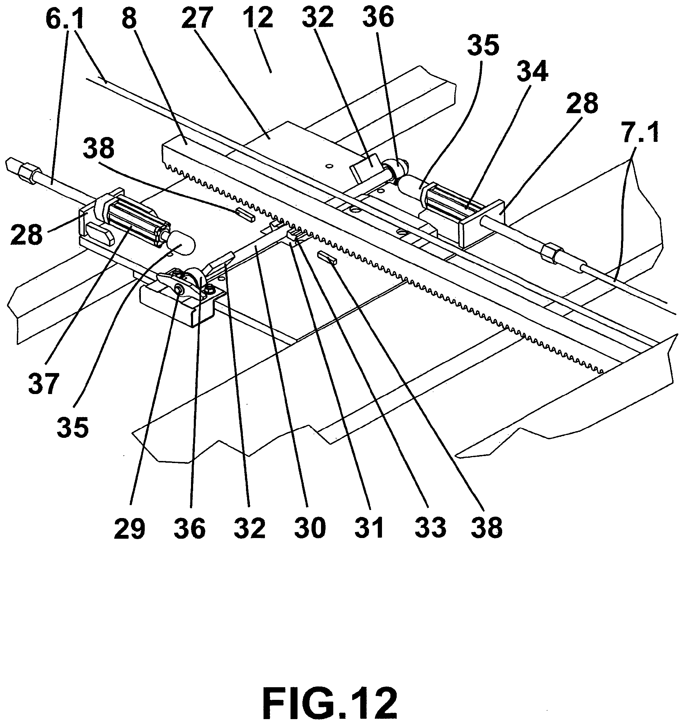

Figure 12 shows a perspective view of another alternative embodiment, with the blocking device (12) in an inactive state, the means of assembly or friction being comprised of a fixed frame (27) with anchor supports (28) associated with retaining means,
The fixed frame (27) has a non-return block (29) for guiding a rotating bar (30) and a window (31) in its central zone.

The rotating bar (30) positions its attachment to the fixed frame (27) by means of bearings (36).
The rotating bar (30) incorporates a thrust plate (32) at its respective ends, each positioned with a different orientation and facing the retaining means of the blocking device (12), said rotating bar (30) incorporating, in its central zone, a connection block (33) coinciding with the means of assembly or friction of the longitudinal coupling profile (8), said connection block (33) showing its position in the window (31) of the fixed frame (27).
The retaining means of the blocking device (12) comprise an actuator (37) associated with a thrust head (35) and, in turn, with the extension cable (7.1) or with the retraction cable (6.1). Also shown are the control means (38) for informing a central control unit of the positioning of the rotating bar (30), when passing from an inactive to an active position.
In this alternative embodiment, the retraction cable (6.1) and the extension cable (7.1) include an internal electric signal which, when interrupted by the breakage or slackening of said cables, activates the operation of the actuators (37) which activate the brake system. The position of the blocking device (12) in an active state is not shown but as a reference it can be taken from figure 11.

## Claims

1. **-** Brake system on passenger boarding bridges with three or more tunnels for boarding aircraft and vessels, said passenger boarding bridges comprising an initial tunnel (1), one or more intermediate tunnels (2, 2.1), an end tunnel (3) and drive means (4), **characterized in that** it comprises a longitudinal coupling profile (8), configured with means of assembly or friction along the whole of its length, firmly fixed to one or more tunnels covering the telescoping range of the passenger boarding bridge and a blocking device (9-10-11-12), with means of assembly or friction corresponding with those of the longitudinal coupling profile (8) and retaining means on the blocking device (9-10-11-12), said blocking device (9-10-11-12) being firmly fixed to one or more tunnels and said blocking device (9-10-11-12) being associated with an extension cable (7-7.1) and with a retraction cable (6-6.1), the longitudinal coupling profile (8) and the blocking device (9-10-11 or 12) being positioned facing each other and separated in an inactive state and coupled together in an active state, the longitudinal profiles (8) and blocking devices (9-10-11-12) being positioned both on the lower part of the tunnels and on the ceiling of the same.

2. **-** Brake system on passenger boarding bridges with three or more tunnels for boarding aircraft and vessels, according to claim 1, **wherein** a passenger boarding bridge with three tunnels is configured with:
• a longitudinal coupling profile (8) firmly fixed on the intermediate tunnel (2) and a blocking device (9-10-11-12), firmly fixed on the end tunnel (3), or
• a longitudinal coupling profile (8), firmly fixed on the initial tunnel (1) and a blocking device (9-10-11-12), firmly fixed on the intermediate tunnel (2),

3. **-** Brake system on passenger boarding bridges with three or more tunnels for boarding aircraft and vessels, according to claim 1, **wherein** a passenger boarding bridge with four tunnels is configured with:
• a longitudinal coupling profile (8), firmly fixed on the intermediate tunnel (2) and on the intermediate tunnel (2.1) and a blocking device (9-10-11-12), firmly fixed on the intermediate tunnel (2.1) and on the end tunnel (3), or
• a longitudinal coupling profile (8), firmly fixed on the initial tunnel (1) and on the intermediate tunnel (2.1) and a blocking device (9-10-11-12), firmly fixed on the intermediate tunnel (2) and on the end tunnel (3),

4. **-** Brake system on passenger boarding bridges with three or more tunnels for boarding aircraft and vessels, according to claim 1, **wherein** the means of assembly or friction of the blocking device (9) comprise a fixed frame (15) with mobile frames (13 and 13.1) associated with the retaining means of the blocking device (9), one end of said fixed frame (15) having rollover protection supports (16) securing the mobile frames (13 and 13.1) with a lock pin (17) in its central zone, said fixed frame (15) incorporating in its middle zone, control means (38) and two side pulleys (14.1) associated with the retraction cable (6) and, near to said pulleys, another two side pulleys (14.1) associated with the extension cable (7), incorporating on the fixed frame (15), securing brackets (39) of the lugs of the retraction cable (6) and of the extension cable (7), optionally incorporating a tension spring (40) on one or more lugs.

5. **-** Brake system on passenger boarding bridges with three or more tunnels for boarding aircraft and vessels, according to claim 4, **wherein** the mobile frame (13) is associated with the retraction cable (6) and the mobile frame (13.1) is associated with the extension cable (7), said mobile frames (13 and 13.1) being configured by a platform with a cavity (18) at one end, intended for inserting the lock pin (17), said platform incorporating, at the opposite end, and anchoring sleeve (19) of the retaining means of the blocking device (9), said platform incorporating a connecting head (20) configured with means of assembly or friction, corresponding with the means of assembly or friction of the longitudinal coupling profile (8) and, in its middle zone, a central pulley (14) associated with two side pulleys (14.1) positioned on the fixed frame (15), which are in turn associated either with the retraction cable (6) or with the extension cable (7).

6. **-** Brake system on passenger boarding bridges with three or more tunnels for boarding aircraft and vessels, according to the preceding claims, **wherein** the retaining means of the blocking device (9) comprise a spring (21) anchored at one of its ends to the anchoring sleeve (19) of the platform of the mobile frames (13 and 13.1), said spring (21) being anchored at the opposite end to a fixed tensioner (22).

7. **-** Brake system on passenger boarding bridges with three or more tunnels for boarding aircraft and vessels, according to claim 1, **wherein** the means of assembly or friction of the blocking device (10) comprise a fixed frame (15) with mobile frames (23 and 23.1) associated with the retaining means of the blocking device (10), one end of said fixed frame (15) having rollover protection supports (16) for securing the mobile frames (23 and 23.1) with a lock pin (17) in its central zone, said fixed frame (15) having control means (38) in its middle zone.

8. **-** Brake system on passenger boarding bridges with three or more tunnels for boarding aircraft and vessels, according to claim 7, **wherein** the mobile frame (23) is associated with the retraction cable (6.1) with internal electric signal, and the mobile frame (23.1) is associated with the extension cable (7.1) with internal electric signal, said mobile frame (23 and 23.1) being configured by a platform, said platform having, at one of its ends, a cavity (18), intended for inserting the lock pin (17), incorporating, at the opposite end a fastening bolt (24) of the retaining means of the blocking device (10), said platform incorporating a connecting head (20).

9. **-** Brake system on passenger boarding bridges with three or more tunnels for boarding aircraft and vessels, according to claims 1, 7 and 8, **wherein** the retaining means of the blocking device (10) comprise an actuator (25) anchored at one end to the head of the stem of said actuator (25) with the fastening bolt (24), of the platform of the mobile frames (23 and 23.1), and anchored at the opposite end to a fixed support (26), said actuators (25) being activated when the internal electric signal of the retraction cable (6.1) and/or the extension cable (7.1.) is interrupted.

10. **-** Brake system on passenger boarding bridges with three or more tunnels for boarding aircraft and vessels, according to claim 1, **wherein** the means of assembly or friction of the blocking device (11) comprise a fixed frame (27) with anchor supports (28) associated with the retaining means of the blocking device (11), said fixed frame (27) having a non-return block (29) for securing a rotating bar (30) with bearings (36), incorporating control means (38) and a window (31) in its central zone.

11. **-** Brake system on passenger boarding bridges with three or more tunnels for boarding aircraft and vessels, according to claim 10, **wherein** the rotating bar (30), incorporates at each of its ends, a thrust plate (32), each positioned with a different orientation and facing the retaining means of the blocking device (11), said rotating bar (30) incorporating, in its central zone, a connection block (33), coinciding with the means of assembly or friction of the longitudinal coupling profile (8), said connection block (33) being positioned in the window (31) of the fixed frame (27).

12. **-** Brake system on passenger boarding bridges with three or more tunnels for boarding aircraft and vessels, according to claims 10 and 11, **wherein** the retaining means of the blocking device (11) comprise a spring (34) associated with a thrust head (35) and, in turn, either with the extension cable (7) or with the retraction cable (6).

13. **-** Brake system on passenger boarding bridges with three of more tunnels for boarding aircraft and vessels, according to claims 1,10 and 11, **wherein** the retaining means of the blocking device (12) comprise an actuator (37) associated with a thrust head (35) and, at the same time, either with the extension cable (7.1) or with the retraction cable (6.1), said actuators (37) being activated when the internal electric signal of the retraction cable (6.1) and/or the extension cable (7.1) is interrupted.
